(19) Europäisches Patentamt
European Patent Office
Office européen des brevets

(11) EP 3 677 701 A1

(12) EUROPEAN PATENT APPLICATION
published in accordance with Art. 153(4) EPC

(43) Date of publication:
08.07.2020 Bulletin 2020/28

(51) Int Cl.:
C23C 2/12 (2006.01)     B21D 22/20 (2006.01)
B21D 22/26 (2006.01)    B21D 24/00 (2006.01)
B21D 24/04 (2006.01)    B32B 9/04 (2006.01)
B32B 15/04 (2006.01)    C23C 2/28 (2006.01)

(21) Application number: 18863218.6

(22) Date of filing: 28.09.2018

(86) International application number:
PCT/JP2018/036550

(87) International publication number:
WO 2019/066063 (04.04.2019 Gazette 2019/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.09.2017 JP 2017188467

(71) Applicant: Nippon Steel Corporation
Tokyo 100-8071 (JP)

(72) Inventors:
• KUBO, Masahiro
Tokyo 100-8071 (JP)

• NAKAZAWA, Yoshiaki
Tokyo 100-8071 (JP)
• SUZUKI, Toshiya
Tokyo 100-8071 (JP)
• NOMURA, Naruhiko
Tokyo 100-8071 (JP)
• FUJITA, Soshi
Tokyo 100-8071 (JP)
• IRIKAWA, Hideaki
Tokyo 100-8071 (JP)
• FUDA, Masahiro
Tokyo 100-8071 (JP)

(74) Representative: Vossius & Partner
Patentanwälte Rechtsanwälte mbB
Siebertstrasse 3
81675 München (DE)

(54) PLATED STEEL SHEET, PLATED STEEL SHEET COIL, METHOD FOR PRODUCING HOT PRESSED ARTICLE, AND AUTOMOBILE COMPONENT

(57) Provided is a coated steel sheet including a steel sheet, a first aluminum coating layer provided on a first surface of the steel sheet, a zinc compound layer or a metallic zinc layer provided on a surface of the first aluminum coating layer, and a second aluminum coating layer provided on a second surface of the steel sheet, as an outermost surface of the steel sheet. Further provided are a coated steel sheet coil using this coated steel sheet, and a method of producing a hot-press formed article, as well as an automobile part using a press formed article produced by the method of producing a hot-press formed article.

[FIG. 1]

**Description**

Technical Field

This disclosure relates to a coated steel sheet, a coated steel sheet coil, a method of producing a hot-press formed article, and an automobile part.

Background Art

In recent years, in order to protect the environment and prevent global warming, there has been an increasing demand for reducing the consumption of chemical fuels, and this demand has influenced various manufacturing industries. For example, there is no exception to an automobile that is indispensable for daily life and activities as a means of transportation, and improvement of fuel efficiency, *etc.* by reduction of the weight of the car body, or the like has been demanded. However, in automobiles, simple reduction of the body weight is not permitted in terms of product quality, and it is necessary to ensure safety properly.

Much of the automobile structure is composed of iron, especially steel sheets, and reduction of the weight of the steel sheets is important for reducing the weight of the car body. However, as described above, it is not allowed to simply reduce the weight of the steel sheet, and is required to ensure the mechanical strength of the steel sheet. Such demand on the steel sheet is made not only in the car manufacturing industry but also in other various manufacturing industries. Under such circumstances, researches and developments are underway for a steel sheet, which can maintain or even increase the mechanical strength, even if its thickness is reduced compared to the conventional steel sheet by means of enhancement of the mechanical strength of a steel sheet.

In general, a material with a high mechanical strength tends to have lower shape fixability in forming such as bending, and working itself becomes difficult in the case of working into an intricate shape. As one of means for solving this formability problem, there is a so-called "hot-press forming (hot press method, high temperature press method, or die quench method)". In the case of hot-press forming, a material to be formed is once heated to a high temperature, and the steel sheet softened by the heating is press-formed, followed by cooing.

According to this hot-press forming, since the material is once heated to a high temperature and softened, the material can be easily press-formed, and further the mechanical strength of the material can be increased owing to the hardening effect by cooling after the forming. Therefore, by this hot-press forming, it is possible to yield a formed article that is superior in both shape fixability and mechanical strength.

However, when the hot-press forming is applied to a steel sheet, iron or the like on the surface is oxidized to generate a scale (oxide), for example, when heated to a high temperature of 800°C or higher. Therefore, a step of removing the scale (descaling step) is required after the hot-press forming, and the productivity is lowered. In addition, with respect to a component or the like requiring certain corrosion resistance, it is necessary to perform a rust prevention treatment, or metal coating on the component after processing at an additionally required surface cleaning step, or surface treatment step, which also reduces the productivity.

Examples of a method for suppressing such decrease in productivity include a method by which a steel sheet is coated. In general, various materials, such as an organic material or an inorganic material, are used as the coating on a steel sheet. Among others, a steel sheet with a zinc-based coating, which has a sacrificial anti-corrosion effect on a steel sheet, has been widely used as a steel sheet for automobile, *etc.* from the viewpoints of its corrosion resistance performance and producing technology of a steel sheet. However, the heating temperature at the time of hot-press forming (700-1000°C) is higher than the decomposition temperature of an organic material, or the boiling point of a metallic material such as a Zn-based material. Therefore, when the sheet is heated for hot-press forming, the surface coating layer may evaporate to cause remarkable deterioration of the surface properties.

Therefore, for a steel sheet to be subjected to hot-press forming requiring heating to a high temperature, for example, use of a so-called aluminum coated steel sheet, which is a steel sheet coated with an Al-based metal having a higher boiling point than an organic coating or a Zn-based metal coating, is preferable.

By applying an Al-based metal coating, it is possible to prevent a scale from depositing on the surface of a steel sheet, and a step such as the descaling step becomes unnecessary, and therefore the productivity can be improved. In addition, the Al-based metal coating also has a rust preventive effect, which improves the corrosion resistance after painting. A method of using an aluminum coated steel sheet, for which an Al-based metal coating has been applied to a steel having predetermined steel ingredients, for hot-press forming is described in Patent Document 1.

However, when an Al-based metal coating is applied, depending on the preheating condition prior to press-forming, the Al coating first melts, and then changes into an aluminum-iron alloy layer due to Fe diffused from the steel sheet. The aluminum-iron alloy layer may sometimes grow so that the aluminum-iron alloy layer may reach the surface of steel sheet. Hereinafter, an aluminum-iron alloy is also referred to as "Al-Fe alloy" or also as "alloy". Since the alloy layer is extremely hard, a work flaw is formed by contact with a mold at the time of pressing.

In this regard, Patent Document 2 discloses a method, by which a film of a wurtzite compound such as a zinc oxide film (hereinafter also referred to as "ZnO film") is formed on the surface of an Al coated steel sheet for the purpose of improving the lubricity in hot working, as well as the conversion treatment performance and corrosion resistance in order to prevent formation of a work flaw.

Meanwhile, Patent Document 3 discloses a method, by which a film of one or more Zn compounds selected from the group consisting of Zn hydroxide, Zn phosphate, and an organic acid Zn salt is formed on the surface of an Al coated steel sheet for the purpose of improving the adhesion of ZnO film at the time of press-forming. By the method of Patent Document 3, it is possible to improve the lubricity in hot working, film adhesion, spot weldability, or corrosion resistance after painting by forming a film of a ZnO due to the heat at the time of hot-press forming of an Al coated steel sheet on which a film of a Zn compound has been formed, and forming a ZnO film superior in adhesion.

Citation List

Patent Documents

[Patent Document 1] Japanese Patent Application Laid-Open (JP-A) No. 2000-38640
[Patent Document 2] International Publication No. WO 2009/131233
[Patent Document 3] JP-A No. 2014-139350

SUMMARY OF INVENTION

Technical Problem

The coated steel sheets of Patent Documents 2 and 3 are all excellent in lubricity in hot working and can suppress formation of a work flaw.

Meanwhile, generally when an uncoated material or a coated steel sheet is subjected to hot-press forming, wear occurs at a sliding surface of the mold for hot-press forming where a coated steel sheet slides, as a part corresponding to a vertical wall or a flange of a press formed article. For this reason, mold repair is required to cope with wear occurring at the sliding surface of the mold in an area receiving a high contact pressure in hot-press forming. Although it was expected that the coated steel sheets of Patent Documents 2 and 3 could reduce mold wear, they could solve the problem as little as an uncoated material or a coated steel sheet.

Further, in connection with the problem on a mold for hot-press forming, countermeasures for wear with respect to each of the upper mold and the lower mold have not been investigated so far.

Under such circumstances, an object of the present disclosure is to provide a coated steel sheet that suppresses, when used for hot-press forming, occurrence of wear of a sliding surface of both the upper mold and the lower mold of the mold for hot-press forming.

Another object of the disclosure is to provide, using this coated steel sheet, a coil of a coated steel sheet that suppresses occurrence of wear of a sliding surface of both the upper mold and the lower mold of the mold for hot-press forming, a method of producing a hot-press formed article, and an automobile part using a press formed article produced by the method of producing a hot-press formed article.

Solution to Problem

The gist of the present disclosure is as follows.

<1> A coated steel sheet including:

a steel sheet,
a first aluminum coating layer provided on a first surface of the steel sheet,
a zinc compound layer or a metallic zinc layer provided on a surface of the first aluminum coating layer, and
a second aluminum coating layer provided on a second surface of the steel sheet, as an outermost surface of the steel sheet.

<2> The coated steel sheet according to <1>, wherein a coating amount of the first aluminum coating layer is from 40 to 160 g/m$^2$ in terms of Al amount.
<3> The coated steel sheet according to <1> or <2>, wherein a coating amount of the second aluminum coating layer is from 20 to 100 g/m$^2$ in terms of Al amount.

<4> The coated steel sheet according to any one of <1> to <3>, wherein a coating amount of the first aluminum coating layer is larger than a coating amount of the second aluminum coating layer.

<5> A coated steel sheet coil in which the coated steel sheet according to any one of <1> to <4> is reeled up, wherein the first surface of the coated steel sheet faces outward, and the second surface of the coated steel faces inward.

<6> A method of producing a hot-press formed article, in which the coated steel sheet according to any one of <1> to <4> is heated, and then pressed for hot-press forming with a mold having an upper mold and a lower mold, wherein the coated steel sheet is pressed in a state in which the first surface of the coated steel sheet faces upward in a gravity direction, and the second surface faces downward in the gravity direction.

<7> The method of producing a hot-press formed article according to <6>, wherein the coated steel sheet is heated in a state in which the first surface of the coated steel sheet faces upward in the gravity direction, and the second surface faces downward in the gravity direction.

<8> The method of producing a hot-press formed article according to <6> or <7>, wherein the upper mold is a die and the lower mold is a punch.

<9> The method of producing a hot-press formed article according to any one of <6> to <8>, wherein the mold has a holder that holds the coated steel sheet.

<10> An automobile part including:

a steel sheet, which has a hardened structure and is convexly bent toward a first surface side,
a first aluminum-iron alloy layer provided on a first surface of the steel sheet,
a zinc oxide film provided on a surface of the first aluminum-iron alloy layer,
a painted layer provided on a surface of the zinc oxide film,
a second aluminum-iron alloy layer provided on a second surface of the steel sheet, and
an aluminum oxide film provided on a surface of the second aluminum-iron alloy layer.

Advantageous Effects of Invention

According to the disclosure, it is possible to provide a coated steel sheet which can suppress occurrence of wear of the sliding surfaces of both the upper mold and the lower mold of a mold for hot-press forming when used in a hot-press forming application.

Further, according to the disclosure, it is possible to provide a coil of a coated steel sheet, which can suppress occurrence of flaw of the sliding surfaces of both the upper mold and the lower mold of a mold for hot-press forming, using this coated steel sheet, and a method of producing a hot-press formed article, as well as an automobile part using a press formed article produced by the method of producing a hot-press formed article.

BRIEF DESCRIPTION OF DRAWINGS

FIG. 1 is a schematic sectional view showing an example of the coated steel sheet of the present embodiment.
FIG. 2 is a schematic diagram for explaining a presumed action for suppressing occurrence of wear of the sliding surface of the lower mold.
FIG. 3 is a process flow diagram showing an example of an ordinary process from production of a coated steel sheet to hot-press forming.
FIG. 4 is a schematic diagram showing an example of an automobile part of the embodiment.
FIG. 5 is a schematic diagram showing an evaluation device for lubricity in hot working.

DESCRIPTION OF EMBODIMENTS

Next, the present disclosure will be described in detail.
A preferable embodiment of this disclosure will be described in detail below with reference to the appended drawings. Note that, in this description and the drawings, elements that have substantially the same function and structure are denoted with the same reference signs, and repeated explanation may be omitted.

<Coated Steel Sheet>

A coated steel sheet according to an embodiment of this disclosure will be described.

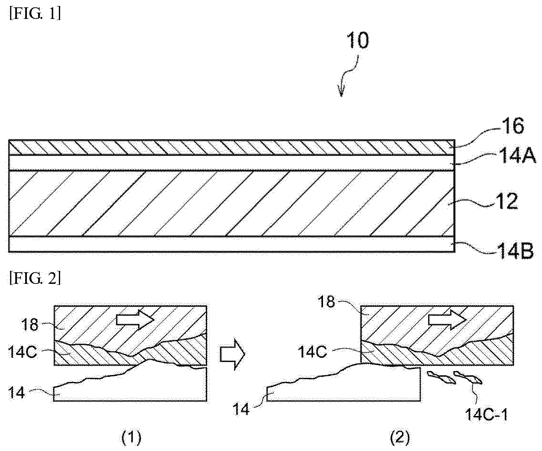

A coated steel sheet according to the embodiment includes a steel sheet, a first aluminum coating layer provided on the first surface of the steel sheet, and a zinc compound layer or a metallic zinc layer provided on the surface of the first aluminum coating layer, and a second aluminum coating layer provided on the second surface of the steel sheet, as the outermost surface of the steel sheet. A coated steel sheet according to this embodiment has a zinc compound layer or a metallic zinc layer as the outermost surface layer on the first surface side of the steel sheet, and the second aluminum coating layer as the outermost surface layer on the second surface side of the steel sheet (see FIG. 1). That is, the first surface of the coated steel sheet is constituted with a zinc compound layer or a metallic zinc layer, and the second surface of the coated steel sheet is constituted with the second aluminum coating layer.

In this regard, in FIG. 1, 10 stands for a coated steel sheet, 12 for a steel sheet, 14A for the first aluminum coating layer, 14B for the second aluminum coating layer, and 16 for a zinc compound layer or a metallic zinc layer.

In a case where an oil or fat has been applied to the surface of the coated steel sheet for prevention of contamination or for cleaning, the oil or fat is neglected. This is because such an oil or fat is eliminated at the time of heating to be performed before hot-press forming, and there is no influence on the product.

The first surface and the second surface of the coated steel sheet, and the first surface and the second surface of the steel sheet of this embodiment are respectively the surfaces facing each other in the thickness direction of the steel sheet. In other words, the first surface and the second surface are two sides of the same sheet. At the time of hot-press forming, the first surface of a coated steel sheet is a surface that faces upward in the gravity direction, and comes in contact with the upper mold of a mold for hot-press forming (the mold positioned on the upper side in the gravity direction). The second surface of a coated steel sheet is a surface that faces downward in the gravity direction, and comes in contact with the lower mold of a mold for hot-press forming (the mold positioned on the lower side in the gravity direction).

That is, the coated steel sheet of this embodiment is configured such that the first surface which comes in contact with the upper mold is constituted with a zinc compound layer or a metallic zinc layer, and the second surface which comes in contact with the lower mold is constituted with an aluminum coating layer.

The first surface of a coated steel sheet on the side which comes in contact with the upper mold is herein also referred to as the "upper surface", and the second surface of a coated steel sheet on the side which comes in contact with the lower mold is also referred to as the "lower surface".

Also, zinc is also referred to as "Zn", an aluminum coating layer as an "Al coating layer", a zinc oxide film as a "ZnO film", and a zinc compound layer or a metallic zinc layer as a "Zn compound or metallic Zn layer". The first aluminum coating layer is also referred to as an "upper Al coating layer", the second aluminum coating layer as a "lower Al coating layer", a zinc oxide layer provided on the surface of the first aluminum coating layer as an "upper ZnO film", and a zinc compound layer or metallic zinc layer provided on the surface of the first aluminum coating layer as an "upper Zn compound layer or upper metallic Zn layer".

Owing to the above constitution, the coated steel sheet of this embodiment suppresses occurrence of wear of the sliding surfaces of both the upper mold and the lower mold of a mold for hot-press forming (hereinafter also referred to as a "mold") at the time of hot-press forming. Meanwhile, the coated steel sheet of this embodiment has been discovered based on the following knowledge.

When a conventional Al coated steel sheet for hot-press forming (a coated steel sheet having Al coating layers on both sides of the steel sheet) is subjected to hot-press forming, seizing, in which aluminum of the Al coating layer reacts with a mold material (iron), occurs, and a large amount of intermetallic compound (aluminum agglutinate) generated by seizing is agglutinated on the surface of the mold and then detached causing wear of the mold.

Meanwhile, an Al coated steel sheet, since an oxide of aluminum is apt to be formed on the surface of the Al coating layer, does not easily react with a chemical conversion solution for a conversion treatment after hot-press forming. Therefore, the paintability becomes poor, and the corrosion resistance of the press formed article becomes low.

In this regard, examples of a conversion treatment include a zinc phosphate treatment. The chemical conversion solution for a zinc phosphate treatment contains primary zinc phosphate and phosphoric acid as major ingredients, as well as cations (such as nickel or manganese). Further, an anion (a nitrate ion, an $\alpha$-nitrate ion, or a fluoride ion), an organic acid (such as citric acid.), or the like may be added to the chemical conversion solution for a zinc phosphate treatment.

For the purpose of suppressing wear of a mold and improving the corrosion resistance of a press formed article, Patent Documents 1 and 2 proposes a coated steel sheet in which a ZnO film is formed on each of the surfaces of Al coating layers provided on both the sides of a steel sheet (hereinafter referred to as an "Al coated steel sheet with ZnO film").

In the case of an Al coated steel sheet with ZnO film, since the surface of an Al coating layer is covered with a ZnO film, agglutination of aluminum agglutinate to the surface of a mold due to seizure is suppressed even when it is hot-press formed, and the frictional coefficient with the mold surface is reduced. As a result, wear of the mold may be suppressed.

An Al coated steel sheet with ZnO film has high reactivity between ZnO of the ZnO film and a chemical conversion solution for a conversion treatment. In addition, formation of aluminum oxide on the surface of an Al coating layer is suppressed, and an alloy phase of iron and aluminum in the Al coating layer (alloy phase other than aluminum oxide) also partially reacts with the chemical conversion solution. Therefore, the paintability is high, and the corrosion resistance of a press formed article is also improved.

However, with respect to hot-press forming, especially when the press contact pressure is high, a higher contact pressure is loaded on a sliding surface of the mold where a coated steel sheet slides as in a part corresponding to a vertical wall or a flange part of a press formed article. As the consequence, it comes to be known that wear of a sliding surface of a mold may take place when an Al coated steel sheet is used irrespective of presence or absence of a ZnO film.

The inventors speculate that wear of a mold is unavoidable, when an aluminum coating layer is physically in direct contact with a mold, even if a ZnO film is intercalated. Therefore, it is inferred that a cushioning material is necessary between a mold and an aluminum coating material.

The inventors have considered that agglutination of a large amount of aluminum agglutinate on to the surface of a mold causes wear of the mold, on the other hand, in the case of moderate agglutination of aluminum agglutinate on to the surface of a mold, the aluminum agglutinate functions as a cushioning material for the surface of a mold and is effective on reduction of wear of the mold. Therefore, the inventors have conducted a test of coating agglutination to the upper mold and the lower mold to have found the following. The amount of aluminum agglutination to the mold is different between the upper mold and the lower mold, and there exist an agglutinate weight and a surface condition suitable for each of the upper mold and the lower mold of a mold for hot-press forming in order to suppress occurrence of wear of a sliding surface of each of the upper mold, and the lower mold. In the case of an Al coated steel sheet with ZnO film, when the coating amount of the Al coating layer (coating weight per unit area) is increased, the agglutination amount of the aluminum agglutinate to the surface of the mold increases while keeping the ZnO film.

Therefore, the inventors have focused on the fact that the inner surface of a press formed article (for example, in the case of a press formed article for an automobile, the surface facing the interior of an automobile, when the press formed article is attached to the automobile) is not required to be painted. Namely, the inventors have focused on the method that with respect to an Al coated steel sheet with ZnO film, the lower surface of the coated steel sheet is used as the inner surface of the press formed article, and the lower surface of the coated steel sheet is constituted with an Al coating layer without forming a ZnO film, which improves paintability and gives corrosion resistance, on the lower surface side of the coated steel sheet.

Then, the inventors have found with respect to an Al coated steel sheet with ZnO film that by constituting the lower surface of a coated steel sheet, which comes in contact with the lower mold, with an exposed Al coating layer, the agglutination amount of an aluminum agglutinate on a sliding surface of the lower mold is increased appropriately, and the aluminum agglutinate functions as a protective film for the sliding surface of the lower mold. That is, the inventors have obtained the following knowledge. When only the lower surface of a coated steel sheet, which comes in contact with the lower mold, the lower mold is constituted with an exposed Al coating layer, an aluminum agglutinate adheres thereto through contact between the sliding surface of the lower mold and the Al coating layer to form an aluminum agglutinate layer with as appropriate thickness on the sliding surface of the lower mold (see FIG. 2 (1)). Then, the sliding surface of the lower mold and the Al coating layer repeatedly slide each other, so that agglutination and detachment of the aluminum agglutinate to and from the sliding surface of the lower mold occur repeatedly to maintain an aluminum agglutinate layer with a proper thickness, thereby maintaining a function as an protective film for the sliding surface of the lower mold (see FIG. 2 (2)).

In FIG. 2, 14 stands for an Al coating layer, 18 for a mold, 14C for the aluminum agglutinate layer, and 14C-1 for detached aluminum agglutinate.

Based on the above knowledge, the inventors have found that occurrence of wear of the sliding surface of the lower mold of a mold for hot-press forming at the time of hot-press forming of a coated steel sheet according to this embodiment can be suppressed owing to the aforedescribed constitution.

Further, the inventors have also found that a coated steel sheet according to this embodiment exhibits improved weldability because a ZnO film is not formed on the lower surface.

Furthermore, the inventors have also studied on suppression of wear of the sliding surface in a case where a high contact pressure is applied to the upper mold (the mold disposed on the upper side in the gravity direction) of a mold for hot-press forming. As a result, the following knowledge has been obtained. In the case of an Al coated steel sheet with ZnO film, with respect to an Al coating layer on the upper surface side of a coated steel sheet, which comes in contact with the upper mold, unevenness in thickness hardly occurs even if it is subjected to heat of hot-press forming, different from the Al coating layer on the lower surface side of the coated steel sheet, because biased coating hardly occurs due to the influence of the gravity. For this reason, a small area where additionally a high contact pressure is loaded in the sliding surface of the upper mold receiving a high contact pressure hardly appears, and when the coating amount of an Al coating layer (coating weight per unit area) is increased to increase the agglutination amount of aluminum agglutinate on the surface of the upper mold, the aluminum agglutinate functions as a protective film. Meanwhile, when the coating amount of the Al coating layer is increased, protrusions of the surface of the Al coating layer become dense, so that protrusions of the surface of the ZnO film become dense corresponding to the surface properties of Al coating layer. Therefore, when the coating amount of the Al coating layer is increased, the contact pressure acted on the sliding surface of the upper mold is decreased.

The inventors have also obtained the following knowledge. At the time of hot-press forming, a ZnO film on the upper surface side in an Al coated steel sheet is required to be present only at the time of hot-press forming. Therefore, before hot-press forming, it is only necessary that "an upper Zn compound layer, or an upper metallic Zn layer", which forms a ZnO film by heating, is present besides the ZnO film on the upper surface side of an Al coated steel sheet.

Based on the above knowledge, the inventors have found that wear of the sliding surface of the upper mold can be suppressed even keeping the upper ZnO film coating that constitutes the outer surface of a press formed article, improves the paintability, and gives favorable corrosion resistance, by increasing the coating amount of the upper Al coating layer in a coated steel sheet of this embodiment.

The coated steel sheet according to the embodiment will be described below in detail.

(Steel Sheet)

As a steel sheet for bearing a metal coating (steel sheet before coating), for example, a steel sheet having a high mechanical strength (namely, various properties concerning mechanical deformation or destruction, such as tensile strength, yield point, elongation, percentage reduction of area, hardness, impact value, fatigue strength, or creep strength) is preferable. An example of a steel sheet that exhibits a high mechanical strength, and is used as a coated steel sheet of this embodiment (steel sheet before coating) is as follows. In this regard, the notation of % means % c unless otherwise specified.

It is preferable that the steel sheet contains in terms of % by mass at least one of C at from 0.01 to 0.6%, Si at from 0.01 to 0.6%, Mn at from 0.3 to 3%, P at from 0.001 to 0.03%, S at from 0.0001 to 0.02%, Cr at from 0.001 to 2.5%, Ti at from 0.01 to 0.1%, Al at from 0.01 to 0.1%, Mo at from 0.001 to 1.5%, and B at from 0.0001 to 0.1%; and that the balance consists of Fe and impurities.

Specifically, for example, the steel sheet contains in terms of % by mass, C at from 0.01 to 0.6%, Si at from 0.01 to 0.6%, Mn at from 0.3 to 3%, P at from 0.001 to 0.03%, S at from 0.0001 to 0.02% as essential elements, and the balance consists of Fe and impurities. And, if necessary, the same may contain at least one of Cr at from 0.001 to 2.5%, Ti at from 0.01 to 0.1%, Al at from 0.01 to 0.1%, Mo at from 0.001 to 1.5%, and B at from 0.0001 to 0.1% as an optional element.

C is included in order to secure a desired mechanical strength. When C is less than 0.01%, a sufficient mechanical strength cannot be obtained, and the effect of including C poorly develops. On the other hand, when C exceeds 0.6%, although a steel sheet can be further hardened, melt cracking is apt to occur. Therefore, the C content is preferably from 0.01% to 0.6%.

Si is one of the strength improving elements for improving a mechanical strength, and is included in order to secure a desired mechanical strength in the same manner as C. When Si is less than 0.01%, it is difficult to obtain the effect of improving a strength, and sufficient mechanical strength cannot be obtained. Meanwhile, Si is also an easily oxidizable element. Therefore, when Si exceeds 0.6%, the wettability decreases at the time of hot-dip aluminum coating, and a bare spot may be generated. Therefore, the Si content is preferably from 0.01% to 0.6%.

Mn is one of the strengthening elements that strengthens a steel, and is also one of the elements that improves the hardenability. Further, Mn is also effective in preventing hot shortness due to S which is one of impurities. When Mn is less than 0.3%, these effects cannot be obtained, and only when Mn is 0.3% or more, the above effects are exhibited. On the other hand, when Mn exceeds 3%, the residual $\gamma$ phase becomes too much and the strength may be lowered. Accordingly, the Mn content is preferably from 0.3% to 3%.

P is an impurity and is preferably limited to 0.03% or less because it adversely affects the hot workability. More preferably, it is limited to 0.02% or less. On the other hand, reduction of P more than necessary places a heavy load on the steel-making step, so the lower limit should preferably be 0.001%.

S is an impurity and is preferably limited to 0.02% or less because it adversely affects the hot workability, or a mechanical property, such as ductility or toughness. More preferably, it is limited to 0.01% or less. On the other hand, reduction of S more than necessary places a heavy load on the steel-making step, so the lower limit should preferably be 0.0001%.

Cr has the effect of suppressing a nitriding reaction of Al (formation of AlN), which is a competitive reaction in alloying an Al coating layer to an Al-Fe alloy, and increasing the adhesion between the base material and the coating layer. In order to ensure the adhesion between the base material and the coating layer, Cr is included as necessary. When Cr is added in excess of 2.5%, the effect is saturated and the manufacturing cost is increased, therefore the upper limit should preferably be 2.5%. It is more preferably 2.0% or less. Cr is an atom that affects the diffusion behavior of Fe so as to affect the constituent phase structure or the form of the alloy layer. On the other hand, reduction of Cr more than necessary places a heavy load on the steel-making step, so the lower limit should preferably be 0.001%.

Ti is one of the strength enhancing elements, and is also an element that improves the heat resistance of an Al coating layer. When the Ti content is less than 0.01%, the effect of enhancing the strength and the effect of improving the resistance to oxidation cannot be obtained, and these effects are exhibited when the content is 0.01% or more. On the other hand, when the Ti content is too high, for example a carbide or a nitride may be formed to soften the steel. In particular, when the Ti content exceeds 0.1%, there is a high possibility that the target mechanical strength cannot be obtained. Therefore, the Ti content is preferably from 0.01% to 0.1%.

Al is used as a deoxidation element, but has an adverse effect on the coating property because it forms an oxide film. However, when the Al amount is 0.1% or less, the adverse effect is acceptable. The Al amount is preferably 0.07% or less. On the other hand, the Al amount below 0.01% places a heavy load on the steel-making step, so the lower limit should preferably be 0.01%.

Mo may be added from the viewpoint of improving the hardenability to enhance the material strength. However, since Mo is an extremely expensive element, a large addition amount of the same leads to a significant cost increase. Therefore, the Mo content is preferably 1.5% or less from the viewpoint of cost reduction. On the other hand, reduction of the Mo amount below 0.001% places a heavy load on the steel-making step, so the lower limit should preferably be 0.001%.

B has an effect of increasing the strength by acting at the time of quenching. When the B content is less than 0.0001%, such an effect of increasing the strength is low. On the other hand, when the B content exceeds 0.1%, inclusions are formed and the sheet become brittle, which may reduce the fatigue strength. Therefore, the B content is preferably from 0.0001% to 0.1%.

This steel sheet may also contain impurities (for example, a chemical component of Cu, Nb, or V, as well as an oxide, or a nitride) that may be unintentionally mixed in at a production step, *etc.*

A steel sheet composed of such chemical components can be hardened by heating at hot-press forming or the like to have a mechanical strength of, for example, about 1500 MPa or more. Although the steel sheet has such a high mechanical strength, it can be easily processed by hot-press forming, because it can be subjected to hot-press forming in a state softened by heating. Further, the steel sheet can realize a high mechanical strength, and as a result, even if it is thinned for weight reduction, the mechanical strength can be maintained or even improved.

(Al Coating Layer)

The upper Al coating layer and the lower Al coating layer will be described. Hereinafter, the common matters, called "A1 coating layer", will be described.

The component composition of an Al coating layer only needs to include Al at 50% or more. Although there is no particular restriction on elements other than Al,

Si may be added intentionally for the following reasons.

When Si is added in an Al coating layer, an Al-Fe-Si alloy layer is formed at the interface between the coating and the base metal, and formation of a brittle Al-Fe alloy layer to be formed at the time of hot dip metal coating can be suppressed. When the Si content is less than 3%, the Al-Fe alloy layer grows thick at the time of applying aluminum coating, which may promote cracking of a coating layer at the time of working to affect adversely the corrosion resistance. On the other hand, when the Si content exceeds 15%, the volume ratio of the Si-containing layer unfavorably increases, and the workability and the corrosion resistance of the coating layer may decrease. Therefore, the Si content in an Al coating layer is preferably from 3 to 15%.

An Al coating layer prevents corrosion of a steel sheet. In addition, with respect to an Al coating layer, generation of a scale (an oxide of iron) by oxidation of its surface is prohibited despite heating at a high temperature, when a coated steel sheet is processed by hot-press forming. By preventing the generation of a scale on an Al coating layer, a scale removing step, a surface cleaning step, a surface treatment step, *etc.* can be omitted, and the productivity for formed article is improved. Further, an Al coating layer has a boiling point and a melting point higher than those of a coating layer composed of an organic material, or a coating layer composed of another metal material (for example, Zn-based material). Accordingly, when hot-press forming is performed, an Al coating layer is less prone to evaporate, and hot-press forming at a higher temperature becomes possible. Consequently, the formability by hot-press forming is further improved, and forming can be performed more easily.

There may exist a very thin oxidized Al film (*e.g.*, 0.1 μm-thick or less) on the surface of an Al coating layer. In this case, it is deemed that there is no oxidized Al film. This is because the oxidized Al film before hot-press forming does not particularly affect the hot-press forming and a hot-press formed article.

An Al coating layer may be alloyed with Fe in a steel sheet by heat at the time of hot dip metal coating or hot-press forming. Therefore, an Al coating layer is not necessarily composed of a single layer having a constant component composition, but includes partially an alloyed layer (alloy layer).

The coating amount of the upper Al coating layer is preferably from 40 to 160 $g/m^2$ in terms of Al amount. By setting the coating amount of the upper Al coating layer at 40 $g/m^2$ or more, an appropriate amount of aluminum agglutinate is agglutinated on the sliding surface of the upper mold, and the suppression effect on wear of the sliding surface of the upper mold is enhanced. Therefore, the lower limit of the coating amount of the upper Al coating layer is preferably 40 $g/m^2$ or more, and more preferably 60 $g/m^2$ or more.

Meanwhile, when the coating amount of the upper Al coating layer is above 160 $g/m^2$, the thickness unevenness of the upper Al coating layer increases, and there appears an area where a local contact pressure against the sliding surface of the upper mold becomes so large and the tendency of occurrence of wear at the sliding surface of the upper mold becomes higher. Therefore, the upper limit of the coating amount of the upper Al coating layer is preferably 160 $g/m^2$ or less, and more preferably 120 $g/m^2$ or less.

The coating amount of the lower Al coating layer is preferably from 20 to 100 $g/m^2$ in terms of Al amount. By setting the coating amount of the lower Al coating layer at 20 $g/m^2$ or more, an appropriate amount of aluminum agglutinate adheres to the sliding surface of the lower mold, and the wear suppression effect on the sliding surface of the lower mold is enhanced. The resistance to corrosion of a press formed article is also improved. Therefore, the coating amount of the lower Al coating layer is preferably 20 $g/m^2$ or more. Further, when the coating amount of the lower Al coating layer is 40 $g/m^2$ or more, an appropriate amount of aluminum agglutinate adheres to the surface of the mold, and the wear suppression effect on the sliding surface of the lower mold is further enhanced. Therefore, the coating amount of the lower Al coating layer is more preferably 40 $g/m^2$ or more.

Meanwhile, when the coating amount of the lower Al coating layer exceeds 100 $g/m^2$, a large amount of aluminum agglutinate adheres to the sliding surface of the lower mold, and the tendency of occurrence of wear at the sliding surface of the lower mold becomes higher. Therefore, the coating amount of the lower Al coating layer is preferably 100 $g/m^2$ or less. Further, when the coating amount of the lower Al coating layer is 80 $g/m^2$ or less, an appropriate amount of coating agglutinate adheres to the surface of the mold, and the wear suppression effect on the sliding surface of the lower mold can be obtained. Therefore, it is more preferably 80 $g/m^2$ or less.

In this regard, it is preferable to adhere appropriately aluminum agglutinate to the sliding surface of the upper mold for the purpose of suppressing wear of the sliding surface of the upper mold in a state where the upper ZnO film formed on the surface of the upper aluminum coating layer. Therefore, the coating amount of the upper aluminum coating layer is preferably relatively large (higher coating weight per unit area is preferable). Meanwhile, with respect to the lower aluminum coating layer, although it is preferable to adhere appropriately aluminum agglutinate to the sliding surface of the lower mold for the purpose of suppressing wear of the sliding surface of the lower mold, it is necessary to suppress thickness unevenness by suppressing bias in an Al coating layer due to heating for hot-press forming. Therefore, the coating amount of the lower coating layer is preferably relatively small (namely, lower coating weight per unit area is preferable).

Therefore, it is preferable that the coating amount of the upper aluminum coating layer is larger than the coating amount of the lower aluminum coating layer.

The coating amount of an Al coating layer of a steel sheet before hot-press forming is determined, for example, by measuring the coating thickness according to JIS H 8672: 1995 (Methods of test for hot dip aluminized coatings on ferrous products) and calculating a value of (coating thickness x 2.7). As for a specific method for measuring a coating thickness, a cross-section of a subject material is mirror-polished, the cross-section is observed with an electron microscope (for example, observed at 1000x), the coating thickness is measured at 5 positions at equal intervals from both the ends in the same visual field, and the mean value is regarded as the coating thickness of the area. In this regard, the coating layer includes the thickness of an Al-Fe alloy layer formed at the interface between the coating layer and the base layer.

As a method of estimating the coating amount of an Al coating layer on a steel sheet before hot-press forming from the steel sheet after hot-press forming, for example, observation of a cross section near the surface including the coating layer is carried out with an electron microscope. When an etching treatment using a 2% natal is performed in mirror polishing the cross section, the coating layer and the base layer having a martensite structure can become distinguishable. By observation of a cross section including a coating layer on the surface and the base layer, for example by 1000x cross-sectional observation, the average thickness of the Al coating layer and the Al diffused layer (tAl) in the observation visual field is measured and the coating amount of the Al coating layer on the steel sheet before hot-press forming is estimated according to the following conversion formula (1):

$$\text{Coating amount of Al coating layer } (g/m^2) = (tAl\ (\mu m) - 5) \times 3\ (g/\mu m \cdot m^2)$$

Formula (1)

(Upper Zn Compound Layer or Upper Metallic Zn Layer)

An upper Zn compound layer or an upper metallic Zn layer is an upper ZnO film, or a layer that becomes an upper ZnO film at the time of hot-press forming. A coated steel sheet is heated in an oxidative atmosphere prior to hot-press forming. At this time, an upper Zn compound layer or an upper metallic Zn layer other than an upper ZnO film is oxidized to form an upper ZnO film. There is no particular restriction on the types of an upper Zn compound layer other than an upper ZnO film and an upper metallic Zn layer, insofar as they are oxidized to form an upper ZnO film. Examples of the upper Zn compound layer other than an upper ZnO film include a zinc phosphate layer and a Zn-based metal soap layer. The Zn compound or the metallic Zn may be mixed with a resin that burns and disappears when heated and formed into an upper Zn compound layer other than an upper ZnO film or an upper metallic Zn layer. The amount of Zn contained in the upper Zn compound layer or the metallic Zn layer is adjusted according to the coating amount of the upper ZnO film of a target product.

(Upper ZnO Film)

The upper ZnO film is a surface that comes in contact with an upper mold and is a film that eventually constitutes the outer surface of a press formed article.

There is no particular restriction on the formation method of an upper ZnO film, and for exampled it can be formed on an Al coating layer by the method described in Patent Documents 1 or 2.

The coating amount of an upper ZnO film is preferably from 0.4 to 4.0 $g/m^2$ in terms of Zn amount from the viewpoint of the corrosion resistance of a product. When the coating amount of an upper ZnO film is 0.4 $g/m^2$ or more in terms of Zn amount, the corrosion resistance of the press formed article is enhanced. Therefore, the lower limit of the coating amount of an upper ZnO film is preferably 0.4 $g/m^2$ or more in terms of Zn amount.

When the coating amount of an upper ZnO film exceeds 4.0 $g/m^2$ in terms of Zn amount, the thickness of the Al coating layer and the ZnO film becomes so thick, that the weldability and the paint adhesion may be deteriorated. Therefore, the upper limit of the coating amount of an upper ZnO film is preferably 4.0 $g/m^2$ in terms of Zn amount. Considering the productivity of a product, the upper limit of the coating amount of an upper ZnO film is more preferably 2.0 $g/m^2$ in terms of Zn amount.

From the viewpoint of mold wear, when the coating amount of an upper Al coating layer is low, the coating amount of an upper ZnO film is preferably higher within the above range.

As for a measuring method of the coating amount of a ZnO film before hot-press forming, for example, it may be determined by measuring the thickness of a ZnO film and then calculating the coating amount according to the conversion formula (ZnO film thickness $\times$ 2). As for a specific method for determining the coating thickness of a ZnO film, a cross-section is mirror-polished, observation of the cross-section near the surface including the ZnO layer and the coating layer is performed with an electron microscope (for example, 10000x), the thickness of the ZnO film is measured at 5 positions at equal intervals from both the ends in the same visual field, and the mean value is regarded as the coating thickness of the ZnO film in the area.

Also with respect to a steel sheet after hot-press forming, and a product observation of the cross-section near the surface including a ZnO layer and a coating layer is performed with an electron microscope, and the presence or absence of an upper Zn compound layer or an upper metallic Zn layer on a steel sheet before hot-press forming can be examined by ascertaining the existence of a ZnO layer with an energy dispersive X-ray spectrometer (EDX, or EDS).

<Method of Producing Hot-press Formed Article/Coated Steel Sheet Coil for Hot-press Forming>

A method of producing a hot-press formed article according to this embodiment is a method in which a coated steel sheet according to this embodiment is hot-press formed to produce a hot-press formed article.

Specifically, the method of producing a hot-press formed article according to this embodiment is a method of producing a hot-press formed article by which a coated steel sheet is heated and then pressed with a mold having an upper mold and a lower mold to perform hot-press forming, wherein a coated steel sheet is hot-press formed in a state that the first surface of the coated steel sheet faces upward in the gravity direction, and the second surface faces downward in the gravity direction.

That is, in the method of producing a hot-press formed article according to this embodiment, hot-press forming of a coated steel sheet is performed such that the upper mold comes in contact with the first surface of the coated steel sheet (the surface of the upper ZnO film) and the lower mold comes in contact with the second surface of the coated steel sheet (the surface of the lower Al coating layer). When hot-press forming is performed in this state, wear of the lower mold can be suppressed even if the press contact pressure is increased. As a result, it is possible to achieve both extension of the life of the lower mold and mass production of the press formed article.

Further, in the method of producing a hot-press formed article according to this embodiment, it is preferable to heat a coated steel sheet (heating before pressing in hot-press forming) in a state the first surface of the coated steel sheet faces upward in the gravity direction, and the second surface faces downward in the gravity direction. When heating for hot-press forming is performed in this state, even if thickness unevenness occurs due to bias in the lower Al coating layer constituting the second surface of the coated steel sheet, wear of the lower mold can be suppressed. As a result, it is possible to achieve both extension of the life of the lower mold and mass production of the press formed article.

In the method of producing a hot-press formed article according to this embodiment, it is preferable that the upper mold is a die and the lower mold is a punch. For example, the outer surface of a press formed article for an automobile (the surface that faces the outside of an automobile when the press formed article is attached to the automobile) is required to have higher corrosion resistance than the inner surface (the surface that faces the inside of an automobile when the press formed article is attached to the automobile). For acquiring high corrosion resistance, a press formed article is painted. When a press formed articles is painted, it is convenient if a ZnO film is on the surface to be painted. A press formed article is convex toward the outer surface of the press formed article. In forming a press formed article, the mold disposed on the convex side of the press formed article is a die. Therefore, in order to arrange the upper ZnO film to the outermost layer of the surface to be painted of the press formed article as the product, it is preferable to use a die as the upper mold, and a punch as the lower mold.

In the method of producing a hot-press formed article according to this embodiment, the mold may have a holder. The holder is, for example, a member that holds a coated steel sheet at a portion that becomes a flange when hot-press forming is performed. The hot-press forming using a holder is draw forming. In the case of draw forming, the contact pressure becomes higher than that in bending without a holder. The method of producing a hot-press formed article according to this embodiment is also applicable to draw forming because it can suppress wear of the lower mold even if the contact pressure is increased, and mass production of press formed articles can be realized. That is, the mass production of formed articles by draw forming can be realized.

In the method of producing a hot-press formed article according to this embodiment, for hot-press forming a coated steel sheet is subjected to blanking (punching) as necessary, and then softened by heating to a high temperature. Thereafter, the softened coated steel sheet is press-formed using a mold, and then cooled down. In this manner, in the hot-press forming, since a coated steel sheet is once softened, subsequent pressing can be easily performed. The hot press formed article is hardened through heating and cooling, so as to yield a formed article having a high tensile strength of about 1500 MPa or more.

As the heating method for hot-press forming, it is possible to employ a heating method by infrared heating, ohmic heating, induction heating, *etc.* in addition to an ordinary electric furnace, or a radiant tube furnace. The heating is performed in an oxidative atmosphere. When an upper Zn compound layer other than an upper ZnO film, or an upper metallic Zn layer is provided as the upper Zn compound layer or the upper metallic Zn layer, this heating changes the upper Zn compound layer or the upper metallic Zn layer existing on the surface of the coated steel sheet to an upper ZnO film.

The Al coating layer of a coated steel sheet melts when heated above its melting point, and at the same time due to interdiffusion with Fe, the Al phase is changed to an Al-Fe alloy phase, or an Al-Fe-Si alloy phase. The melting points of the Al-Fe alloy phase and the Al-Fe-Si alloy phase are high and about 1150°C. There are a plurality of types of Al-Fe phase and Al-Fe-Si phase, and when heated at a high temperature, or for a long time period, they are changed to an alloy phase with a higher Fe concentration.

When the hot-press forming is performed, the Al coating layer is changed to an aluminum-iron alloy layer. The preferable state of the aluminum-iron alloy layer as a press formed article is a state where the layer is alloyed up to the surface, and the Fe concentration in the alloy phase is not high. When the Fe concentration in the surface of the Al coating layer is 10% by mass or more, it is regarded as an aluminum-iron alloy layer. When Al that is not alloyed remains, only this part is rapidly corroded, and the corrosion resistance after coating is deteriorated, and film blistering is extremely likely to occur, therefore it is undesirable. For securely inhibiting such film blistering, it is desirable that the Fe concentration in the surface of the aluminum-iron alloy layer is 20% by mass or more. Meanwhile, when the Fe concentration in the alloy phase becomes too high, the corrosion resistance of the alloy phase itself decreases to impair the corrosion resistance after painting and the film blistering becomes likely to occur. To prevent deterioration of the corrosion resistance after painting, it is desirable that the Fe concentration in the surface of the aluminum-iron alloy layer is 80% by mass or less. In order to securely prevent deterioration of the corrosion resistance after painting, it is desirable that the Fe concentration in the surface of the aluminum-iron alloy layer is 60% by mass or less. That is, the corrosion resistance of an alloy phase depends on the Fe concentration in the alloy phase. Therefore, in order to improve the corrosion resistance after coating, the alloying state is controlled by Al coating amount and heating conditions.

In the heating method for hot-press forming, the average rate of temperature increase in a temperature range of from 50°C to the temperature lower than the maximum reachable sheet temperature by 10°C is preferably from 10 to 300°C/sec. The average rate of temperature increase has strong influence on the productivity in the hot-press forming of a coated steel sheet. When the average rate of temperature increase is less than 10°C/sec, it takes time to soften a coated steel sheet for hot-press forming. Meanwhile, when the rate exceeds 300°C, although softening is rapid, the alloying of an Al coating layer is intense, which may cause powdering. Ordinarily, the average rate of temperature increase is about 5°C/sec in the case of atmospheric heating. An average rate of temperature increase of 100°C/sec or more can be achieved by ohmic heating or high-frequency induction heating.

The structure of a high-strength (high hardness) press formed article obtained by hot-press forming includes a martensite structure at a high percentage. In order to attain a high percentage of martensite structure, it is necessary to heat a steel sheet to the austenite monophasic domain. For this reason, the target temperature of heating for hot-press forming is frequently set at from about 900 to 950°C. Although there is no particular restriction on the maximum reachable temperature in hot-press forming, a temperature less than 850°C is not preferable, because sufficient quenched hardness cannot be obtained. Also, an Al coating layer needs to be modified to an Al-Fe alloy layer. From these viewpoints, the maximum reachable temperature is preferably 850°C or higher. Meanwhile, when the maximum reachable temperature exceeds 1000°C, alloying advances too much, and the Fe concentration in the Al-Fe alloy layer may increase, which may result in a decrease in the corrosion resistance after coating. From these viewpoints, although it is not possible to decide definitely the upper limit of the maximum reachable temperature because the same also depends on the rate of temperature increase, or the coating amount of Al, considering also the economy, the maximum reachable temperature is preferably 1100°C or lower.

Then, in hot-press forming, a coated steel sheet heated to a high temperature is press-formed with a mold. Thereafter, by cooling, a press formed article having a desired shape is obtained.

An example of an ordinary process from production of a coated steel sheet to hot-press forming is as follows.

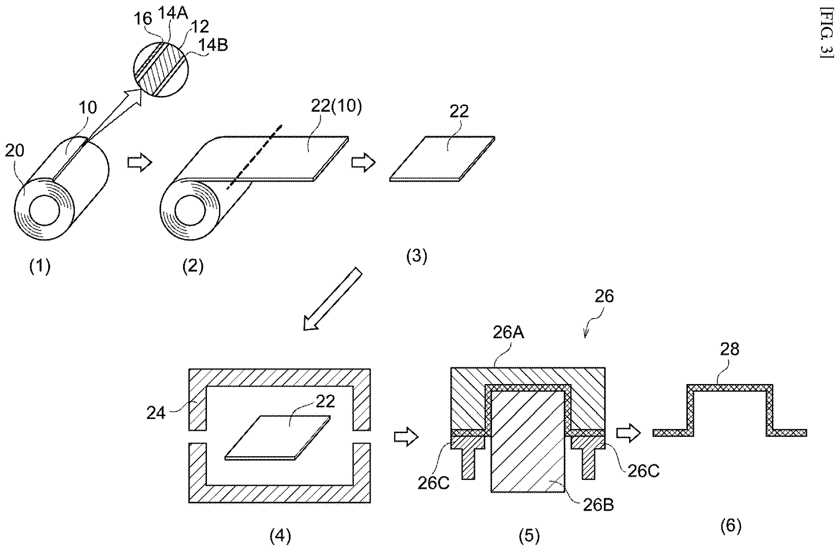

First, a coated steel sheet coil in which a coated steel sheet is reeled up in a coil form is prepared (see FIG. 3 (1): in FIG. 3, 10 stands for a coated steel sheet, 12 for a steel sheet, 14A for the first aluminum coating layer, 14B for the second aluminum coating layer, 16 for a zinc compound layer or a metallic zinc layer, and 20 for a coated steel sheet coil). In this regard, in the coated steel sheet coil, the first surface of the coated steel sheet (the surface of the upper ZnO film) faces outward, and the second surface of the coated steel (the surface of the lower Al coating layer) faces inward.

Next, the coated steel sheet is unreeled from the coated steel sheet coil by upward delivery, and subjected to blanking (punching) (FIGs. 3 (2) and 3 (3); In FIG. 3, 22 stands for a blank).

Next, the blank is heated in a furnace (FIG. 3 (4); 24 in FIG. 3 stands for a heating furnace) without reversing the blank (without changing the positional relationship of the first and second surfaces of the blank) and in a state where the first surface of the blank (the surface of the upper ZnO film) faces upward and the second surface of the blank (the surface of the lower Al coating layer) faces downward.

Next, the heated blank is pressed with a pair of molds, namely a die as the upper mold and a punch as the lower mold, for forming and quenching (FIG. 3 (5); 26 in FIG. 3 stands for the mold, 26A for the upper mold (die), 26B for the lower mold (punch), and 26C for the holder) without reversing the blank in a state where the blank is pushed by the holder tightly against the die as the upper mold.

Then, by removing the mold, the intended press formed article is obtained (FIG. 3 (6); 28 in FIG. 3 stands for the press formed article).

As shown in an example of an ordinary process from production of a coated steel sheet to hot-press forming, a coated steel sheet is unreeled by upward delivery from the coated steel sheet coil (in other words, the coated steel sheet is unreeled from the upper side of the coated steel sheet coil); in which the coated steel sheet is reeled up in a state where the first surface of the coated steel sheet (the surface of an upper Zn compound layer or an upper metallic Zn layer) faces outward, and the second surface of the coated steel (the surface of the lower Al coating layer) faces inward. The unreeled coated steel sheet is blanked and the obtained blank is hot-press formed without reversing the same. As a result, wear of both the upper mold and the lower mold is suppressed even if the contact pressure is increased, and mass production of press formed articles is realized.

<Automobile Part>

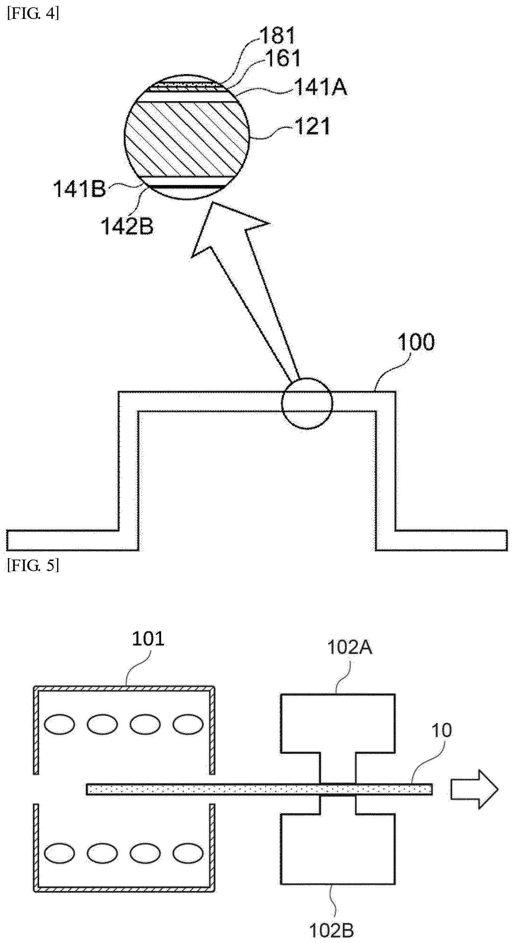

The automobile part according to this embodiment is an automobile part composed of a hot-press formed article. The automobile part has a hardened structure, and includes a steel sheet bent convexly toward the first surface side, a first aluminum-iron alloy layer provided on the first surface of the steel sheet, a zinc oxide film provided on the surface of the first aluminum-iron alloy layer, a painted layer provided on the surface of the zinc oxide film, a second aluminum-iron alloy layer provided on the second surface of the steel sheet, and an aluminum oxide film provided on the surface of the second aluminum-iron alloy layer (see FIG. 4).

In this regard, 100 in FIG. 4 stands for the automobile part, 121 for the steel sheet, 141A for the first aluminum-iron alloy layer, 141B for the second aluminum-iron alloy layer, 142B for the aluminum oxide film, 161 for the zinc oxide film, and 181 for the painted layer.

That is, the automobile part according to this embodiment is a press formed article in which a painting layer is formed after a coated steel sheet according to this embodiment is hot-press formed. Specifically, the automobile part is a press formed article in which the first surface of the hot-press formed coated steel sheet (the surface of the upper ZnO film) constitutes the convex surface of the automobile part, and the second surface (the surface of a layer for which the lower Al coating layer is changed to an aluminum-iron alloy layer, and an aluminum oxide film is formed thereon) constitutes the concave surface of the automobile part, and a painted layer is formed on the first surface of the coated steel sheet.

In this regard, the convex surface of an automobile part means a surface that faces the outside of an automobile when the automobile part is attached to the automobile. Alternatively, the convex surface means the outer surface of a part having a closed cross-section. The concave surface of an automobile part means a surface that faces the inside of the automobile when the automobile part is attached to the automobile. Alternatively, the concave surface is the inner surface of a part having a closed cross-section.

The hardened structure of a steel sheet includes a martensite structure or a tempered martensite structure. The hardened structure may include a bainite structure, a bainite structure, a ferrite structure, a cementite structure, or the like.

An aluminum-iron alloy layer is a layer formed when an Al coating layer is alloyed between the heating before hot-press forming and hot-press forming. The aluminum-iron alloy layer is entirely alloyed from the steel sheet side to the surface side. An Aluminum oxide film exists on the surface side of the second aluminum-iron alloy layer. Although the Aluminum oxide film obstructs painting, it has corrosion resistance. Therefore, painting is not required on the second surface side. The thickness of the aluminum oxide film formed between the heating and the hot-press forming is, for example, 1 μm subject to the manufacturing conditions.

Examples of an automobile part according to this embodiment include a center pillar outer, a door outer, a roof rail outer, a side panel, or a fender. These automobile parts are attached to an automobile, such that the "surface on which the upper ZnO film is formed" faces the outside of the automobile (for example, as exposed from the vehicle).

Examples

Next, the present disclosure will be further described with reference to Examples, provided that the present disclosure be not limited to the following Examples.

<Comparative Examples 1 to 4>

Al was coated by a Sendzimir method on both the sides of the cold rolled steel sheet (by % by mass, C: 0.21%, Si: 0.12%, Mn: 1.21%, P: 0.02%, S: 0.012%, Ti: 0.02%, B: 0.03%, Al: 0.04%, balance: Fe and impurities) with a thickness shown in Table 1. The annealing temperature was about 800°C, the Al plating bath contained Si at 9%, and contained additionally Fe dissolved out from the cold-rolled steel sheet. The coating amount (coating weight per unit area) of an Al coating layer after coating was adjusted by a gas wiping method, such that the coating amounts (coating weights per unit area) of the first Al coating layer and the second Al coating layer to be formed on both the sides of the cold rolled steel sheet coincide with the coating amounts shown in Table 1, and then the sheet was cooled down. Then, a chemical liquid (NANOTEK SLURRY, particle size of zinc oxide particles = 70 nm; produced by C.I. Kasei Co., Ltd.) was applied to the first Al coating layer with a roll coater, and heated at 80°C to form the first ZnO film with the coating amount shown in Table 1. Similarly, on the second Al coating layer, the second ZnO film having the coating amount shown in Table 1 was formed.

In this way, a sample material of a coated steel sheet was obtained.

<Examples 1 to 7>

A sample material of a coated steel sheet was obtained in the same manner as in Comparative Example 1 except that the coating amounts of the first Al coating layer, the second Al coating layer, and the first ZnO film were changed and the second ZnO film was not formed. Even when the ZnO film was provided directly on the Al coating layer, or the same was formed by oxidizing an upper Zn compound other than the ZnO film, or a metallic Zn layer, similar effects can be obtained.

<Evaluation>

The characteristics of the sample material of the thus produced coated steel sheet was evaluated by the following methods. The average rate of temperature increase for the heating to 920°C was was set at 7.5°C/sec.

(1) Lubricity in Hot Working

The lubricity in hot working of the sample material of the coated steel sheet was evaluated using an evaluation device for lubricity in hot working shown in FIG. 5.
The evaluation device for lubricity in hot working shown in FIG. 5 includes a near-infrared heating furnace 101, and a mold consisted with an upper mold 102A and a lower mold 102B. The upper mold 102A and the lower mold 102B have each a convex portion with a width of 10 mm extending in a direction orthogonal to the pulling direction of a coated steel sheet, and the coated steel sheet was pinched between the mutual top faces of the convex portions such that a predetermined pressing load is applied. In addition, the evaluation device for lubricity in hot working is also equipped with a thermocouple (not illustrated) for measuring the temperatures of the coated steel sheet heated in the near-infrared heating furnace 101, and the coated steel sheet about to be pinched between the molds. In FIG. 5, the reference numeral 10 stands for a sample material of a coated steel sheet.

Using the evaluation device for lubricity in hot working shown in FIG. 5, the sample material, which was 30 mm $\times$ 500 mm, and in a state that the surface provided with the first ZnO film faced upward, was heated at 920°C in the near-infrared heating furnace 101 in a nitrogen atmosphere, and thereafter the sample material which cooled down to about 700°C was pulled while being pressed with the pressing load of 3kN by the mold constituted with the upper mold 102A and the lower mold 102B (namely, while the sample material was slid through the mold), and the pulling-out load was measured. The pulling-out length was 100 mm, and the pulling-out speed was 40 mm/s. Then, the frictional coefficient in hot working (= (pulling-out load) / (pressing load)) was determined.

(2) Mold Wear Amount

The mold wear amount was measured by analyzing (1) the difference in the surface shape of "the mold of the evaluation device for lubricity in hot working" before and after the evaluation test on the lubricity in hot working. Specifically, using a stylus-type contour profiler, the profiles of the mold surface at the sliding part before and after the sliding were measured, and the mold wear amount of each of the upper mold and the lower mold was measured.

The details of each Example and each Comparative Example are summarized in Table 1.

[Table 1]

| | Sample material of coated steel sheet | | | | | Evaluation | | |
|---|---|---|---|---|---|---|---|---|
| | Sheet thickness | Coating amount of 1st Al coating layer | Coating amount of 2nd Al coating layer | Coating amount of 1st ZnO film (as Zn) | Coating amount of 2nd ZnO film (as Zn) | Frictional coefficient in hot working | Upper mold wear | Lower mold wear |
| | mm | g/m$^2$ | g/m$^2$ | g/m$^2$ | g/m$^2$ | - | $\mu$m | $\mu$m |
| Comparative Example 1 | 1.6 | 40 | 40 | 0.8 | 0.8 | 0.52 | 12 | 8 |
| Comparative Example 2 | 1.6 | 80 | 80 | 0 | 0.8 | 0.45 | 9 | 9 |
| Comparative Example 3 | 1.6 | 40 | 40 | 0.3 | 0.3 | 0.51 | 13 | 9 |
| Comparative Example 4 | 1.6 | 160 | 160 | 0 | 0 | 0.50 | 12 | 11 |
| Example 1 | 1.6 | 80 | 40 | 0.8 | - | 0.44 | 3 | 0.5 |
| Example 2 | 1.6 | 80 | 80 | 0.8 | - | 0.43 | 3 | 1 |
| Example 3 | 1.6 | 140 | 100 | 0.7 | - | 0.41 | 1 | 5 |
| Example 4 | 1.6 | 40 | 40 | 2.0 | - | 0.45 | 6 | 0.5 |
| Example 5 | 1.6 | 40 | 40 | 6.0 | - | 0.44 | 3 | 0.5 |
| Example 6 | 1.6 | 80 | 20 | 0.8 | - | 0.45 | 3 | 1 |
| Example 7 | 1.6 | 160 | 100 | 0.8 | - | 0.41 | 2 | 5 |

From Table 1 it has been confirmed in Examples 1 to 7 that when the lower surface (second surface) of the coated steel sheet which comes in contact with the lower mold is constituted with the second Al coating layer, wear of the sliding surface of the lower mold can be reduced. Especially, it has been confirmed that when the coating amount of the second Al coating layer is set at from 20 to 100 g/m$^2$, wear of the sliding surface of the lower mold can be further reduced.

Also, it has been confirmed in Examples 1 to 7 that when the upper surface (first surface) of the coated steel sheet which comes in contact with the upper mold is constituted with the ZnO film, and the coating amount of the Al coating layer under the film is set at "from 40 to 160 g/m$^2$", wear of the sliding surface of the upper mold can be further reduced.

As above, the preferred embodiment of the present disclosure has been described in detail with reference to the accompanying drawings, but needless to say the scope of the present disclosure is not limited to those examples. A person with an ordinary skill in the art can obviously find various alterations and modifications within the scope of the technical ideas in the appended claims, and it should be understood that they will naturally come under the technical scope of the present disclosure.

The entire disclosure of Japanese Patent Application No. 2017-188467 is incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1.  A coated steel sheet, comprising:

    a steel sheet,
    a first aluminum coating layer provided on a first surface of the steel sheet,
    a zinc compound layer or a metallic zinc layer provided on a surface of the first aluminum coating layer, and
    a second aluminum coating layer provided on a second surface of the steel sheet, as an outermost surface of the steel sheet.

2.  The coated steel sheet according to claim 1, wherein a coating amount of the first aluminum coating layer is from 40 to 160 g/m$^2$ in terms of Al amount.

3.  The coated steel sheet according to claim 1 or 2, wherein a coating amount of the second aluminum coating layer is from 20 to 100 g/m$^2$ in terms of Al amount.

4.  The coated steel sheet according to any one of claims 1 to 3, wherein a coating amount of the first aluminum coating layer is larger than a coating amount of the second aluminum coating layer.

5.  A coated steel sheet coil in which the coated steel sheet according to any one of claims 1 to 4 is reeled up, wherein the first surface of the coated steel sheet faces outward, and the second surface of the coated steel faces inward.

6.  A method of producing a hot-press formed article, in which the coated steel sheet according to any one of claims 1 to 4 is heated, and then pressed for hot-press forming with a mold having an upper mold and a lower mold, wherein the coated steel sheet is pressed in a state in which the first surface of the coated steel sheet faces upward in a gravity direction, and the second surface faces downward in the gravity direction.

7.  The method of producing a hot-press formed article according to claim 6, wherein the coated steel sheet is heated in a state in which the first surface of the coated steel sheet faces upward in the gravity direction, and the second surface faces downward in the gravity direction.

8.  The method of producing a hot-press formed article according to claim 6 or 7, wherein the upper mold is a die, and the lower mold is a punch.

9.  The method of producing a hot-press formed article according to any one of claims 6 to 8, wherein the mold has a holder that holds the coated steel sheet.

10. An automobile part comprising:

    a steel sheet, which has a hardened structure and is convexly bent toward a first surface side,
    a first aluminum-iron alloy layer provided on a first surface of the steel sheet,
    a zinc oxide film provided on a surface of the first aluminum-iron alloy layer,

a painted layer provided on a surface of the zinc oxide film,
a second aluminum-iron alloy layer provided on a second surface of the steel sheet, and
an aluminum oxide film provided on a surface of the second aluminum-iron alloy layer.

[FIG. 1]

10

16
14A
12
14B

[FIG. 2]

18
14C
14

(1)

18
14C
14
14C-1

(2)

[FIG. 3]

EP 3 677 701 A1

[FIG. 4]

181
161
141A
121
141B
142B

100

[FIG. 5]

101

102A

10

102B

## INTERNATIONAL SEARCH REPORT

| International application No. |
|---|
| PCT/JP2018/036550 |

**A. CLASSIFICATION OF SUBJECT MATTER**
Int. Cl. C23C2/12(2006.01)i, B21D22/20(2006.01)i, B21D22/26(2006.01)i,
B21D24/00(2006.01)i, B21D24/04(2006.01)i, B32B9/04(2006.01)i,
B32B15/04(2006.01)i, C23C2/28(2006.01)i
According to International Patent Classification (IPC) or to both national classification and IPC

**B. FIELDS SEARCHED**

Minimum documentation searched (classification system followed by classification symbols)
Int. Cl. C23C2/12, B21D22/20, B21D22/26, B21D24/00, B21D24/04, B32B9/04,
B32B15/04, C23C2/28

Documentation searched other than minimum documentation to the extent that such documents are included in the fields searched
Published examined utility model applications of Japan   1922-1996
Published unexamined utility model applications of Japan  1971-2018
Registered utility model specifications of Japan     1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/195101 A1 (NIPPON STEEL & SUMITOMO METAL | 1-3 |
| Y | CORP.) 08 December 2016, paragraphs [0001]-[0016], | 4, 6-10 |
| A | examples & US 2018/0171164 A1, paragraphs [0001]-[0016], examples & EP 3305944 A1 | 5 |
| X | JP 2000-234160 A (NISSHIN STEEL CO., LTD.) 29 | 1-3 |
| Y | August 2000, paragraphs [0001]-[0008], example 2, | 4 |
| A | comparative examples 7-10 (Family: none) | 5-10 |
| X | JP 07-126856 A (SUMITOMO METAL INDUSTRIES, LTD.) | 1-3 |
| Y | 16 May 1995, paragraphs [0001]-[0016], [0055]- | 4 |
| A | [0075] (Family: none) | 5-10 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16.10.2018 | 30.10.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/036550 |

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2016/059678 A1 (NIPPON STEEL & SUMITOMO METAL CORP.) 21 April 2016, paragraphs [0038], [0039], table 2 & US 2018/0201123 A1, paragraphs [0092], [0093], table 2 & EP 3208362 A1 | 4, 6-10 |
| Y | JP 04-325665 A (NIPPON STEEL CORP.) 16 November 1992, paragraph [0007] (Family: none) | 6-10 |
| Y | JP 2009-082992 A (NIPPON STEEL CORP.) 23 April 2009, paragraphs [0023]-[0054], fig. 1-11 (Family: none) | 6-10 |
| Y | JP 2010-149184 A (SUMITOMO METAL INDUSTRIES, LTD.) 08 July 2010, paragraphs [0025]-[0059], fig. 1-6 (Family: none) | 6-10 |
| Y | JP 2013-121607 A (JFE STEEL CORP.) 20 June 2013, paragraph [0012], fig. 1 (Family: none) | 6-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000038640 A
- WO 2009131233 A
- JP 2014139350 A
- JP 2017188467 A